# FASCICULE DE BREVET EUROPEEN

(11) **EP 3 402 693 B1**
(45) Date de publication et mention de la délivrance du brevet: **16.03.2022**
(21) Numéro de dépôt: 16826405.9
(22) Date de dépôt: 19.12.2016
(51) Int. Cl.: B60Q 1/04

(54) **PROJECTEUR AVEC PATTE DE FIXATION FRANGIBLE ET GUIDÉE**
SCHEINWERFER MIT ZERBRECHBARER UND GEFÜHRTER BEFESTIGUNGSKLAMMER
HEADLAMP WITH FRANGIBLE AND GUIDED FASTENING BRACKET

(30) Priorité: 15.01.2016 FR 1650321
(43) Date de publication de la demande: 21.11.2018
(73) Titulaire: PSA Automobiles SA, 78300 Poissy (FR)
(72) Inventeur: ROGNON, Olivier, 25340 Anteuil (FR); BESSETTE, Damien, 25150 Ecot (FR); DESSI, Bruno, 25260 Etouvans (FR)
(86) Numéro de dépôt international: PCT/FR2016/053559
(87) Numéro de publication internationale: WO 2017/121938

(56) Documents cités:
- EP-A1- 2 319 729
- WO-A1-2014/048974
- FR-A1- 2 703 961
- FR-A1- 2 844 757
- FR-A1- 2 852 275
- FR-A1- 2 983 142
- JP-A- 2004 203 288
- JP-A- 2004 338 510
- KR-A- 20080 047 762

## Description

L'invention a trait au domaine des véhicules automobiles, plus particulièrement au domaine de la partie avant de véhicules automobiles et de sa déformation en cas d'impact. Plus particulièrement encore, l'invention a trait au domaine de l'éclairage pour véhicules automobiles.

Il existe un protocole de choc à 16 km/h avec 40% de recouvrement sur un mur formant un angle de 10° par rapport à un plan transversal au véhicule. Un tel choc est couramment désigné choc « réparabilité » car il permet, notamment aux sociétés d'assurance, de comparer les coûts de réparation parmi différents véhicules, et ce pour un choc à basse vitesse.

Le document de brevet publié FR 2 943 981 A1 divulgue des pattes de fixation pour projecteurs à l'avant d'un véhicule. Ces pattes sont configurées pour supporter les projecteurs et, en cas de choc à basse vitesse tel que le choc « réparabilité » susmentionné, se déformer pour prendre appui, via des portions en équerre, sur un élément apte à supporter les contraintes ainsi générées.

Le document de brevet publié FR 2 932 133 A1 divulgue un système pour limiter les dommages susceptibles d'être causés, à l'occasion d'un choc avant, par un projecteur à un organe tel que le radiateur. Pour ce faire, le système prévoit une surface d'appui sur le projecteur et une butée sur un élément faiblement déformable de la structure du véhicule, en l'occurrence un montant servant de support latéral au radiateur. Lors d'un choc à l'avant du véhicule, le projecteur se déplace vers l'arrière de sorte que sa surface d'appui vient en contact avec la butée. Cette dernière limite le déplacement du projecteur et limite son intrusion dans le radiateur lors de chocs à basse vitesse. Ce système permet ainsi d'éviter d'endommager le radiateur lors d'un choc à basse vitesse tel que le choc « réparabilité » susmentionné. Le système de cet enseignement sert également de butée transversale vers l'axe longitudinal du véhicule.

Le document de brevet publié FR 2 703 961 A1 divulgue un autre système avec pattes de fixation frangibles.

Aucun de ces enseignements susmentionnés n'aborde la problématique de déversement du projecteur dans l'une ou l'autre direction, au point d'endommager d'autres éléments du véhicule, comme notamment l'aile avant adjacente. En effet, en cas de choc du type « réparabilité », il a été observé que le projecteur peut déverser latéralement vers l'aile avant adjacente et, partant, l'endommager.

L'invention a pour objectif de proposer une solution palliant au moins un des problèmes de l'art antérieur tel que susmentionné. Plus spécifiquement, l'invention a pour objectif de proposer une solution susceptible d'améliorer le score d'un véhicule par rapport au choc « réparabilité », et ce en relation avec les projecteurs.

L'invention a pour objet un boîtier de projecteur pour véhicule automobile selon la revendication 1.

Selon un mode avantageux de l'invention, les surfaces de glissement sont à distance l'une de l'autre respectivement sur les zones proximale et distale, avant rupture de la portion de liaison frangible.

Selon un mode avantageux de l'invention, les surfaces de glissement sont situées latéralement à la portion de liaison frangible par rapport à la direction principale, lesdites surfaces s'étendant préférentiellement sur une distance supérieure ou égale au quart de la largeur de la zone proximale et/ou de la zone distale, au niveau de ladite portion.

Selon un mode avantageux de l'invention, les surfaces de glissement s'étendent, au moins partiellement, suivant une direction inclinée par rapport à la direction principale et par rapport à une direction perpendiculaire à ladite direction principale.

Selon un mode avantageux de l'invention, la surface de glissement sur la zone proximale est située verticalement à un niveau inférieur à la surface de glissement sur la zone distale. Le niveau inférieur s'entend lorsque le boîtier est en position de montage sur le véhicule.

Selon un mode avantageux de l'invention, la patte de fixation frangible et guidée est une première patte de fixation située à l'arrière du boîtier, ledit boîtier comprenant une deuxième patte de fixation située à l'avant du boîtier, ladite patte étant préférentiellement frangible.

L'invention a également pour objet un projecteur pour véhicule automobile, comprenant : un boîtier formant une cavité ouverte ; au moins un module lumineux disposé dans la cavité du boîtier ; et une glace refermant la cavité du boîtier ; remarquable en ce que le boîtier est conforme à l'invention.

L'invention a également pour objet un véhicule automobile comprenant deux ailes avant et deux projecteurs situés à l'avant dudit véhicule et adjacents aux ailes avant, respectivement, remarquable en ce que chacun des projecteurs est conforme à l'invention, la patte frangible et guidée de chacun des projecteurs étant adjacente à l'aile avant correspondante et configurée pour guider le boîtier dudit projecteur transversalement à distance de ladite aile.

Les mesures de l'invention sont intéressantes en ce qu'elles permettent de contrôler le déplacement du projecteur en cas de choc à basse vitesse, tel qu'un choc dit « réparabilité ». Le contrôle du déplacement du projecteur permet d'éviter d'endommager certains éléments coûteux à réparer. L'invention permet ainsi de diminuer les coûts de réparation suite à des chocs à basse vitesse.

D'autres caractéristiques et avantages de la présente invention seront mieux compris à l'aide de la description et des dessins parmi lesquels :
- La figure 1 est une vue de dessus d'une portion gauche d'un véhicule et d'un mur d'un dispositif de test de choc, le véhicule comprenant un projecteur conforme à l'invention ;
- La figure 2 est une vue en perspective de la patte arrière de fixation du projecteur de la figure 1.

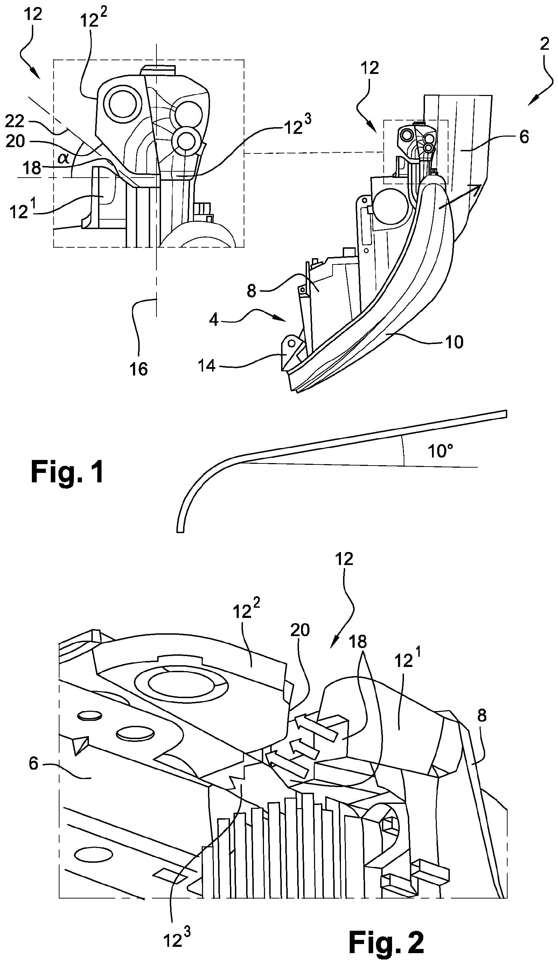

La figure 1 illustre une portion avant gauche d'un véhicule 2, comprenant un projecteur 4 et une aile avant gauche 6, adjacente au projecteur 4. C'est à dessein que les autres éléments, comme notamment le pare-chocs, le radiateur, le brancard, etc. n'ont pas été représentés, l'invention s'intéressant plus particulièrement au déplacement du projecteur lors d'un choc avant, comme notamment un choc du type « réparabilité » contre un mur incliné à 10° par rapport à un plan perpendiculaire à l'axe longitudinal du véhicule. Le projecteur 4 présente une forme généralement courbe au point de former, au moins en partie, une liaison entre la face avant et l'aile avant. En cas de choc frontal, en particulier sur un mur incliné à 10°, tel qu'illustré à la figure 1, le projecteur a tendance à déverser latéralement vers l'extérieur, suivant la direction indiquée par la flèche. Un tel déversement est défavorable pour le score « réparabilité » car il engommage l'aile avant adjacente.

Le projecteur 4 comprend un boîtier 8 réalisé par une paroi formant une cavité ouverte. Cette dernière est destinée à recevoir un ou plusieurs modules lumineux, comme notamment un module d'éclairage du type code (éclairement de croisement, couramment désigné « low beam » en anglais) et route (ou pleins phares, couramment désigné « high beam » en anglais), ou encore un module de signalisation du type lanterne et/ou clignotant. La cavité est refermée par une glace 10 en matière transparente, telle que du verre ou du plastique (par exemple du polycarbonate). Le boîtier 8 peut comprendre une ou plusieurs pattes de fixation 12 et 14. En l'occurrence, l'une est disposée à l'avant et l'autre à l'arrière.

Afin de contrer le déversement latéral du projecteur 4 vers l'extérieur, la patte de fixation arrière 12 est frangible et comprend des moyens de guidage latéral vers l'axe longitudinal (médian) du véhicule.

La patte de fixation 12 est illustrée de manière agrandie à la figure 1. On peut observer qu'elle s'étend suivant un axe principal 16 depuis la paroi formant le boîtier.

Elle comprend une zone proximale 12¹ s'étendant directement depuis la face extérieure de la paroi en question. Elle comprend également une zone distale 12² par rapport à ladite paroi. La zone distale 12² est configurée pour être fixée au véhicule, en l'occurrence à proximité de l'aile avant. Les zones proximale 12¹ et distale 12² sont reliées l'une à l'autre par une portion de liaison 12³. Cette portion 12³ forme avantageusement une continuité de matière entre les zones proximale 12¹ et distale 12². Afin d'être frangible, cette portion est de section réduite par rapport à chacune des zones proximale 12¹ et distale 12². En l'occurrence, la portion de liaison 12³ s'étend transversalement sur moins de la 50% de la largeur de chacune des zones proximale 12¹ et distale 12² adjacentes. Il est par ailleurs intéressant d'observer que la patte de fixation 12 est une patte arrière et que la portion de liaison frangible 12³ est située latéralement du côté extérieur du véhicule, c'est-à-dire du côté de l'aile avant correspondante.

Toujours en relation avec l'illustration agrandie de la patte de fixation 12 à la figure 1, on peut observer que les zones proximale 12¹ et distale 12² forment, latéralement à la portion de liaison 12³, des surfaces 18 et 20 disposées à distance l'une de l'autre et s'étendant, au moins partiellement, suivant une direction 22 inclinée par rapport à la direction principale 16 de la patte et la direction transversale à la direction principale. Plus précisément, cette direction 22 forme un angle α avec la direction transversale. L'angle α est avantageusement compris entre 20° et 70°, préférentiellement ente 30° et 60°. Ces surfaces 18 et 20 forment des surfaces de glissement aptes à glisser l'une sur l'autre après rupture de la portion frangible 12³ en cas de choc à l'avant du véhicule. Ce glissement suivant cette direction 22 permet de contrer le déversement latéral du projecteur vers l'extérieur du véhicule. Les pattes de fixation 12 et 14 sont avantageusement réalisées en matière plastique, et avantageusement venues de matière avec la paroi du boîtier 8.

La figure 2 est une vue de détail et en perspective arrière de la patte de fixation 12 du projecteur de la figure 1. On peut observer les zones proximale 12¹ et distale 12² ainsi que la portion de liaison 12³ où une ligne de rupture en zigzag est représentée. On peut également observer la distance qui sépare les deux surfaces de glissement 18 et 20. Cette distance, avantageusement comprise entre 1mm et 5mm, favorise la déformation de la portion frangible 12³ lors d'un choc à l'avant du véhicule, et, partant, la rupture de cette portion.

Après rupture de cette portion 12³, la surface 18 de la zone proximale 12¹ vient en contact avec la surface 20 de la zone distale 12². Cette dernière reste fixée à la structure du véhicule et sert ainsi de butée. Comme cela est visible à la figure 2 ainsi qu'à la figure 1, les surfaces de glissement 18 et 20 ont des profils correspondants, c'est-à-dire essentiellement qui s'épousent lorsqu'elles sont en contact. De plus ces profils peuvent présenter, outre une portion inclinée suivant la direction 22 (figure 1), une portion généralement transversale, située entre la portion inclinée et la portion de liaison 12³. Cette portion transversale permet de limiter l'effet de guidage suivant la direction inclinée 22 (figure 1) de la portion inclinée et, partant, d'éviter un guidage trop important dans cette direction.

Toujours en relation avec la figure 2, on peut également observer que la surface 18 sur la zone proximale 12¹ est située verticalement à un niveau inférieur à celui de la surface 20 de la zone distale 12². Cette différence de niveau peut être comprise entre 1mm et 10mm, préférentiellement entre 1mm et 5mm. Cette différence est intéressante car le projecteur est susceptible de se déplacer légèrement vers le haut en cas de choc à l'avant du véhicule. Elle permet ainsi d'assurer un contact optimal entre les surfaces de glissement 18 et 20.

De manière générale, lors d'un choc frontal du véhicule, en particulier un choc à basse vitesse du type « réparabilité », les pattes avant et arrière du projecteur se rompent et ce dernier se déplace vers l'arrière. Dans son déplacement vers l'arrière, les surfaces de glissement à la patte arrière entrent en contact mutuel et contrent la tendance naturelle du projecteur à se déplacer latéralement vers l'extérieur. L'aile avant correspondante et la joue intérieure correspondante du passage de roue restent alors intactes, ou du moins peu endommagées. Il est entendu que l'ampleur des dommages est fonction de la vitesse et la nature de l'impact. L'invention s'adresse essentiellement aux chocs à basse vitesse tels que ceux du test dit « réparabilité ».

De manière générale, les surfaces de glissement peuvent prendre diverses formes.

## Revendications

1. Boîtier (8) de projecteur (4) pour véhicule automobile (2), comprenant :
- une paroi avec une face intérieure délimitant une cavité apte à recevoir au moins un module lumineux, et une face extérieure ;
- au moins une patte de fixation (12) faisant saillie de la face extérieure de la paroi suivant une direction principale (16) ;
- la ou une des pattes de fixation (12) est étant frangible (12³) en cas d'impact à l'avant du véhicule (2) et comprenant des moyens de guidage (18, 20) du boîtier (8) après rupture de ladite patte (12)
- la patte de fixation (12) comprenant une zone proximale (12¹) de la paroi, une zone distale (12²) de fixation au véhicule (2), et une portion de liaison (12³) desdites zones proximale (12¹) et distale (12²) qui est frangible dans le cas de l'impact à l'avant du véhicule
- les moyens de guidage comprenant des surfaces de glissement mutuel (18, 20) sur les zones proximale (12¹) et distale (12²), **caractérisé en ce que**
- la portion de liaison frangible (12³) s'étend sensiblement transversalement à la direction principale (16), dans la direction de la largeur de la patte (12) sur moins de la moitié de la largeur de la patte dans la zone proximale (12¹) et/ou distale (12²), au niveau de ladite portion (12³) -

2. Boîtier (8) selon la revendication 1, **caractérisé en ce que** les surfaces de glissement (18, 20) sont à distance l'une de l'autre respectivement sur les zones proximale (12¹) et distale (12²), avant rupture de la portion de liaison frangible (12³).

3. Boîtier (8) selon l'une des revendications 1 et 2, **caractérisé en ce que** les surfaces de glissement (18, 20) sont situées latéralement à la portion de liaison frangible (12³) par rapport à la direction principale (16), lesdites surfaces (18, 20) s'étendant préférentiellement sur une distance supérieure ou égale au quart de la largeur de la zone proximale (12¹) et/ou de la zone distale (12²), au niveau de ladite portion (12³).

4. Boîtier (8) selon l'une des revendications 1 à 3, **caractérisé en ce que** les surfaces de glissement (18, 20) s'étendent, au moins partiellement, suivant une direction inclinée (22) par rapport à la direction principale (16) et par rapport à une direction perpendiculaire à ladite direction principale (16).

5. Boîtier (8) selon l'une des revendications 1 à 4, **caractérisé en ce que** la 2. surface de glissement (18) sur la zone proximale (12¹) est située verticalement à un niveau inférieur à la surface de glissement (20) sur la zone distale (12²), lorsque le boîtier est monté sur le véhicule.

6. Boîtier (8) selon l'une des revendications 1 à 5, **caractérisé en ce que**, lorsque le boîtier est monté sur le véhicule, la patte de fixation frangible et guidée (12) est une première patte de fixation située à l'arrière du boîtier, ledit boîtier (8) comprenant une deuxième patte de fixation (14) située à l'avant du boîtier, ladite patte étant préférentiellement frangible.

7. Projecteur (4) pour véhicule automobile, comprenant :
- un boîtier (8) formant une cavité ouverte ;
- au moins un module lumineux disposé dans la cavité du boîtier ; et
- une glace (10) refermant la cavité du boîtier ;
**caractérisé en ce que** le boîtier (8) est conforme à l'une des revendications 1 à 6.

8. Véhicule automobile (2) comprenant deux ailes avant (6) et deux projecteurs (4) situés à l'avant dudit véhicule et adjacents aux ailes avant (6), respectivement, **caractérisé en ce que** chacun des projecteurs (4) est conforme à la revendication 7, la patte frangible et guidée (12) de chacun des projecteurs (4) étant adjacente à l'aile avant correspondante (6) et configurée pour guider le boîtier (8) dudit projecteur (4) transversalement à distance de ladite aile (6).

## Patentansprüche

1. Scheinwerfergehäuse (8) für ein Kraftfahrzeug (2) mit
- eine Wand mit einer Innenseite, die einen Hohlraum begrenzt, der mindestens ein Lichtmodul aufnehmen kann, und eine Außenseite;
- mindestens eine von der Außenseite der Wand in einer Hauptrichtung (16) vorstehende Befestigungslasche (12);
- der oder einer der Befestigungslaschen (12) bei einem Aufprall vor dem Fahrzeug (2) zerbrechbar (12³) ist und Führungsmittel (18, 20) für das Gehäuse (8) nach dem Brechen des Lasches (12) aufweist.
- die Befestigungslasche (12) einen proximalen Wandbereich (12¹), einen distalen Fahrzeugbefestigungsbereich (12²) und einen Verbindungsbereich (12³) der proximalen (12¹) und distalen (12²) Bereiche aufweist, der bei einem Aufprall des Fahrzeugs vor dem Aufprall zerbrechlich ist
- die Führungsmittel mit Gleitflächen (18, 20) an den proximalen (12¹) und distalen (12²) Bereichen, **dadurch gekennzeichnet, dass**
- der zerbrechbare Verbindungsabschnitt (12³) sich im Wesentlichen quer zur Hauptrichtung (16) in Breitenrichtung des Beins (12) über weniger als die Hälfte der Breite des Beins im proximalen (12¹) und/oder distalen Bereich (12²) an dem Abschnitt (12³) erstreckt.

2. Gehäuse (8) nach Anspruch 1, **dadurch gekennzeichnet, dass** die Gleitflächen (18, 20) vor dem Brechen des zerbrechlichen Verbindungsabschnitts (12³) jeweils an den proximalen (12¹) und distalen (12²) Bereichen voneinander beabstandet sind.

3. Gehäuse (8) nach einem der Ansprüche 1 und 2, **dadurch gekennzeichnet, dass** die Gleitflächen (18, 20) seitlich am zerbrechbaren Verbindungsabschnitt (12³) in Bezug auf die Hauptrichtung (16) angeordnet sind, wobei sich die Oberflächen (18, 20) vorzugsweise über einen Abstand erstrecken, der größer als oder gleich einem Viertel der Breite des proximalen Bereichs (12¹) ist und/oder des distalen Bereichs (12²) an dem Abschnitt (12³).

4. Gehäuse (8) nach einem der Ansprüche 1 bis 3, **dadurch gekennzeichnet, dass** sich die Gleitflächen (18, 20) zumindest teilweise in einer Richtung erstrecken, die in Bezug auf die Hauptrichtung (16) und in Bezug auf eine Richtung senkrecht zu der Hauptrichtung (16) geneigt ist.

5. Gehäuse (8) nach einem der Ansprüche 1 bis 4, **dadurch gekennzeichnet, dass** die Gleitfläche (18) am proximalen Bereich (12¹) vertikal auf einem Niveau unterhalb der Gleitfläche (20) am distalen Bereich (12²) liegt, wenn das Gehäuse am Fahrzeug angebracht ist.

6. Gehäuse (8) nach einem der Ansprüche 1 bis 5, **dadurch gekennzeichnet, dass**, wenn das Gehäuse an dem Fahrzeug angebracht ist, die zerbrechbare und geführte Befestigungslasche (12) eine erste Befestigungslasche ist, die sich hinter dem Gehäuse befindet, wobei das Gehäuse (8) eine zweite Befestigungslasche (14) aufweist, die sich vor dem Gehäuse befindet, wobei die Lasche vorzugsweise zerbrechbar ist.

7. Scheinwerfer (4) für Kraftfahrzeuge mit
- ein Gehäuse (8), das einen offenen Hohlraum bildet;
- mindestens ein Lichtmodul, das im Hohlraum des Gehäuses angeordnet ist; und
- ein Eis (10), das den Hohlraum des Gehäuses schließt;
**Dadurch gekennzeichnet, dass** das Gehäuse (8) einem der Ansprüche 1 bis 6 entspricht.

8. Kraftfahrzeug (2) mit zwei vorderen Flügeln (6) und zwei vorderen Scheinwerfern (4), die sich vor dem Fahrzeug befinden und den vorderen Flügeln (6) benachbart sind, **dadurch gekennzeichnet, dass** jeder der Scheinwerfer (4) Anspruch 7 entspricht, wobei der zerbrechliche und geführte Lappen (12) jedes der Scheinwerfer (4) an den entsprechenden vorderen Flügel (6) angrenzt und konfiguriert ist, das Gehäuse (8) des Scheinwerfers (4) quer zu führen in einem Abstand von dem Flügel (6).

## Claims

1. Headlamp housing (case (8) headlamp (4)) for motor vehicle (2), comprising:
- a wall with an inner face marking a cavity capable of receiving at least one light module, and an outer face;
- at least one attachment leg (12) protruding from the outer face of the wall in a main direction (16);
- one or more of the fastening legs (12) is frangible (12³) in case of impact on the front of the vehicle (2) and includes means of guidance (18, 20) of the case (8) after failure of the said leg (12).
- the attachment leg (12) comprising a proximal (12¹) area of the wall, a distal (12²) area of attachment to the vehicle (2), and a portion of connection (12³) of those proximal (12¹) and distal (12²) areas which is frangible in the case of the forward impact of the vehicle
- guidance means including mutual slip surfaces (18, 20) on proximal (12¹) and distal (12²) areas,
**characterized by**
- the frangible bond portion (12³) extends significantly across the main direction (16), in the direction of the width of the paw (12) over less than half the width of the paw in the proximal zone (12¹) and/or distal zone (12²), at the level of the said portion (12³).

2. Case (8) according to Claim 1, characterized that the slip surfaces (18, 20) are at a distance from each other on proximal (12¹) and distal (12²) zones, respectively, before breaking the frangible bond portion (12³).

3. Case (8) according to one of the claims 1 and 2, characterized that the slip surfaces (18, 20) are located laterally to the frangible bond portion (12³) in relation to the main direction (16), the said surfaces (18,20) preferably extending over a distance greater than or equal to one quarter of the width of the proximal zone (12¹) and/or the distal zone (12²), at the level of that portion (12³).

4. Case (8) according to one of the claims 1 to 3, characterized that the slip surfaces (18, 20) extend, at least partially, in an inclined direction (22) in relation to the main direction (16) and in relation to a direction perpendicular to the said main direction (16).

5. Case (8) according to one of the claims 1 to 4, characterized as the slip surface (18) on the proximal zone (12¹) is located vertically below the slip surface (20) on the distal zone (12²), when the case is mounted on the vehicle.

6. Case (8) according to one of the claims 1 to 5, **characterized by** the fact that, when the case is mounted on the vehicle, the frangible and guided fastening leg (12) is a first fastening leg located at the rear of the case, the case (8) includes a second fastening leg (14) located at the front of the case, the said leg being preferably frangible.

7. Projector (4) for motor vehicle, including:
- an enclosure (8) forming an open cavity;
- at least one light module placed in the enclosure cavity; and
- an ice (10) closing the enclosure cavity;
characterized as the case (8) conforms to one of the claims 1 to 6.

8. Motor vehicle (2) consisting of two front wings (6) and two headlamps (4) located at the front of the vehicle and adjacent to the front wings (6), respectively, characterized as each headlamp (4) conforms to claim 7, the frangible and guided leg (12) of each headlamp (4) being adjacent to the corresponding front wing (6) and configured to guide the case (8) said headlamp (4) transversely at a distance from the said wing (6).
